# EUROPEAN PATENT APPLICATION

(11) **EP 2 522 786 A1**
(43) Date of publication of application: **14.11.2012**
(21) Application number: 12161370.7
(22) Date of filing: 27.03.2012
(51) Int. Cl.: E04B 1/80, B32B 27/36, B32B 27/00, E04B 1/76, E04B 1/74

(54) **Insulating panel**

(30) Priority: 10.05.2011 IT MI20110800
(71) Applicant: Politec Polimeri Tecnici S.A., 6855 Stabio (CH)
(72) Inventor: Conterno, Cosimo, 6850 Mendrisio (CH)
(74) Representative: Giuli, Maurizio Mario Galdino

(57) **Abstract**

An insulating panel (10) comprises at least one internal insulating mattress (13) interposed between two outer covering sheets (11,12). Both the internal mattress (13) and the outer sheets (11,12) are produced with a single preferred material and wherein the panel (10) comprises fixing systems (14, 140) for joining together the outer sheets, the fixing systems (14, 140) being produced with the preferred material.

## Description

The present invention relates to an insulating panel.

A wide variety of insulating panels are currently available on the market, produced with different materials and in different forms, depending on the type of use requested.

A common problem of the panels known in the state of the art is linked to their production: they comprise a series of superimposed layers made of different materials which do not make them easy to recycle.

These panels are in fact typically produced with the interpositioning of an insulating layer made of expanded material (in general polyurethane or polystyrene) or fibrous material (for example rockwool or the like) between two outer sheets in metal plate.

At the end of its useful life or for a simple maintenance substitution or in the treatment of production rejects, in order to allow the panel to be recycled, it must be dismantled into its various parts, which represents an extremely onerous undertaking.

This is even more so in all cases in which the insulating layer and sheets are glued together: for this purpose, in fact, bi-component glues are used, for example of the epoxy type, which must be completely removed to allow recycling.

It should be noted that if the materials are not completely cleaned of these glues, they cannot be recycled, but must be treated as "special waste products", with the consequence that their disposal cost is extremely high.

US 6,067,770 discloses a method for the use of systems of condensation panels in constructions.

As specified in the various examples and above all in columns 3 and 7 of the description, the various layers forming the panel can be produced in the various materials indicated.

In this document no consideration is made nor is any mention made of the problem common to panels known in the state of the art, i.e. their recyclability when they are thrown away.

As mentioned above, although these panels comprise a series of superimposed layers, these layers are made of different materials, which makes it difficult for them to be recycled.

An objective of the present invention is to overcome these drawbacks by providing an insulating panel which can be easily recycled.

A further objective of the present invention is to provide an insulating panel which can be economically constructed with recycled materials.

These objectives are achieved by an insulating panel according to the first claim and optionally provided with the advantageous characteristics of the enclosed subclaims, which form an integrant part of the present invention.

The idea at the basis of the present invention is to provide an insulating panel comprising at least one internal insulating layer interposed between two outer covering sheets, wherein both the internal layer and the outer layers are produced with the same material and are joined by fixing systems also produced with the same material.

This material is advantageously PolyEthyleneTerephthalate (or PET): in this case, the insulating layer is produced with a mattress of PET fibre and outer layers made of compact PET.

Even more advantageously, the PET mattress and/or outer sheets made of compact PET are produced with PET coming from recycled material.

A further object of the present invention comprises a wall, such as a covering wall, roof or similar item consisting of a plurality of panels according to the present invention.

The structural and functional characteristics of the invention and its advantages with respect to the known art, will appear more understandable from the following description, referring to the enclosed drawings, which show a possible practical embodiment of the invention itself.

In the drawings:
- figure 1 illustrates an exploded transversal section of a panel according to the invention;
- figure 2 illustrates a transversal section of the panel of figure 1 in an assembled condition;
- figure 3 illustrates a transversal section of a covering produced by the joining of a plurality of panels of the previous figures;
- figure 4 illustrates a detail of part of a panel of the previous figures in a possible embodiment of the connections;
- figure 5 illustrates a detail of part of a further embodiment of the connections of a panel of the previous figures.

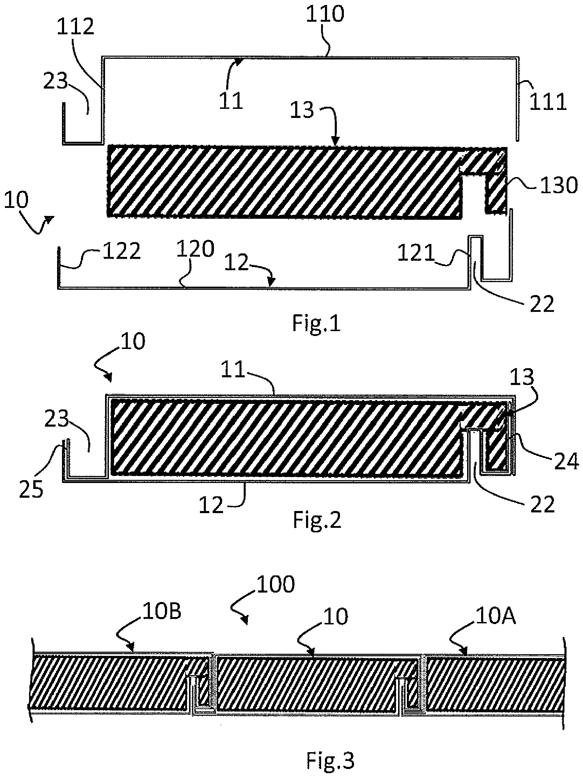

With reference to figures 1, 2 and 4 enclosed herewith, a panel according to a first embodiment of the present invention is indicated with the reference number 10.

The panel 10 in this simpler embodiment comprises an insulating mattress 13 interposed between two shaped outer sheets, an upper sheet 11 and a lower sheet 12.

Both the insulating layer 13 and the sheets 11 and 12 are made of PET (PolyEthyleneTerephthalate).

The assembly of the panel 10 comprises the use of fixing systems that are **characterized in that** they are made of the same material as the outer sheets 11, 12 and internal mattress 13, i.e. in this case, PET.

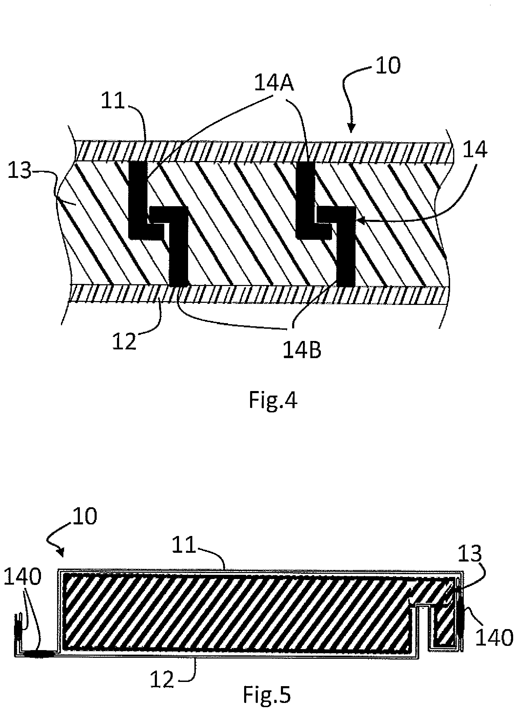

The fixing systems 14 are in this case of the mechanical type and are shown synthetically, in a first embodiment, in figure 4 enclosed, which will be dealt with in more detail further on.

With reference to the panel 10, it should be noted that this is produced so as to comprise two opposite sides with a greater extension provided with the housing seats 22 and 23.

The first seat 22 and second seat 23 are envisaged in correspondence with two opposite peripheral edges of the panel 10, each ending respectively with a first 24 and second engagement flap 25 destined for being housed in the second seat 23 and first seat 22 respectively of analogous adjacent panels 10A, 10B, when these are flanked to form a covering 100, as shown in figure 3.

More specifically, the first engagement flap 24 is defined by a suitable opposing double "U"-shaped profile of the lower sheet 12.

In this way, the first engagement flap defines a side wall of the first seat 22, whereas the body of the panel 10 defines the opposite side.

In order not to lose the insulating characteristics of the panel 10 in the joining areas between two panels 10, 10A, 10B, it should be noted that a shaped end part 130 of the mattress 13 also extends inside the first engagement flap 24, which, in its interior, defines an insulation volume in which the shaped end 130 of the mattress 13 is housed.

This insulation volume is obtained by keeping the sheets 11 and 12 at a distance in this area, by means of a suitable shaping.

The second engagement flap 25, on the other hand, is simply obtained by a simple "U"-shaped fold of the sheets 11 and 12 which, when the panel is assembled, are situated immediately adjacent in this portion.

More specifically: the upper sheet 11 has a flat central part 110 which ends with two opposite edges 111 and 112.

The edge 111 extends perpendicularly with respect to the flat central part 110; the edge 112, on the other hand, is "U" -folded and defines the walls of the second seat 23.

The lower sheet 12 has a flat central part 120 which ends with two opposite edges 121 and 122.

The edge 122 is "U"-folded and extends for a tract perpendicularly to the flat part 120; when the panel is assembled, it is superimposed with respect to the edge 112 of the sheet 11.

The edge 121 has a first and a second "U" folding so as to define the walls of the first seat 22 and part of those of the insulation volume in which the shaped end 130 of the mattress 13 is housed.

In order to allow the reciprocal engagement between two adjacent panels 22 and 23, one obviously opens downwards and the other upwards, i.e. their openings are on opposite sides of the panel 10.

In this way, the assembly of a plurality of adjacent panels 10, 10A, 10B to form the covering (or wall) 100 is facilitated.

With respect to the fixing systems 14 which allow the assembly of the panel 10, these are shown in figure 4 in a first embodiment.

In this case, the fixing systems are of the mechanical type and are removable: they comprise mechanical connections by interference of form that comprise a first part 14A associated with the outer sheet 11 which collaborates in connection with a second part 14B associated with the other sheet 1.2, creating a closed shell inside which the mattress 13 is housed.

In principle, the first 14A and second part 14B of the mechanical connections 14 can be monolithic (or integral) with the respective sheets 11 and 12, for example by extruding them together.

Other solutions different from that illustrated above are obviously possible.

A possible variant is shown in figure 5: in this case, the fixing systems 140 are of the mechanical and non-removable type.

The fixing systems 140 in this case comprise welding cords that irremovably join the two sheets 11 and 12 in the portions of the panel in which they are immediately adjacent, i.e. at the edges.

In this way, it should be noted that the insulation provided by the panel is also increased, as the welding cords 140 (if extended along all the free edges) make the volume inside the panel between the sheets 11 and 12 in which the mattress 13 is housed, airtight.

These welding cords 140 can be produced with various techniques, among which ultrasounds, or that using solvents or similar products, and so forth.

As further variants, one or both of the outer sheets equipped with air chambers, or made of PET with an alveolar structure:can be used, also included in the protection scope defined by the present invention.

The form of the flaps and seats can obviously change at discretion, without being excluded from the disclosures provided by the present invention.

The objectives mentioned in the preamble of the description have therefore been achieved.

The protection scope of the invention is defined by the following claims.

## Claims

1. An insulating panel (10) comprising at least one internal insulating mattress (13) interposed between two outer covering sheets (11,12), **characterized in that** both the internal mattress (13) and the outer sheets (11,12) are produced with the same single preferred material and wherein said panel (10) comprises fixing systems (14,140) for joining said outer sheets, said fixing systems (14,140) being produced with said same preferred material.

2. The panel (10) according to claim 1, **characterized in that** said same preferred material is PolyEthyleneTerephthalate (PET).

3. The panel (10) according to claim 2, **characterized in that** said insulating mattress is made of PolyEthyleneTerephthalate (PET) fiber.

4. The panel (10) according to claim 2 or 3, **characterized in that** said one of said outer sheets (11, 12) is made of compact PolyEthyleneTerephthalate (PET).

5. The panel (10) according to any of the claims from 1 to 4, **characterized in that** said fixing systems (14) comprise mechanical connections (14A, 14B) cooperating by interference of form.

6. The panel (10) according to any of the claims from 1 to 4, **characterized in that** said fixing systems (140) comprise at least one welding cord.

7. The panel (10) according to any of the previous claims, **characterized in that** it comprises housing seats (22, 23) on two opposite sides, envisaged in correspondence with two opposite peripheral edges of said panel (10), each ending respectively with a first (24) and a second (25) engagement flap destined for being housed in the second seat (23) and first seat (22) respectively.

8. The panel (10) according to the previous claim, **characterized in that** said first engagement flap (24) defines an insulation volume in which a shaped end part (130) of said mattress (13) is housed.

9. The panel (10) according to any of the previous claims, **characterized in that** at least one of said outer sheets (11, 12; 21, 22) is alveolar.

10. A wall, such as a covering wall (100), roof or similar item **characterized in that** it comprises a plurality of panels (10) according to the present invention positioned adjacent to each other and reciprocally interlocked.
